# EUROPEAN PATENT SPECIFICATION

(11) **EP 3 533 623 B1**
(45) Date of publication and mention of the grant of the patent: **03.02.2021**
(21) Application number: 18248139.0
(22) Date of filing: 28.12.2018
(51) Int. Cl.: B60C 9/26, B60C 9/18

(54) **TIRE**
REIFEN
PNEUMATIQUE

(30) Priority: 28.02.2018 JP 2018035264
(43) Date of publication of application: 04.09.2019
(73) Proprietor: SUMITOMO RUBBER INDUSTRIES, LTD., Kobe-shi, Hyogo 651-0072 (JP)
(72) Inventor: MATSUMOTO, Yugo, Kobe-shi, Hyogo 651-0072 (JP)
(74) Representative: TBK

(56) References cited:
- EP-A1- 3 069 862
- EP-A1- 3 312 022
- JP-A- 2016 210 305
- JP-B2- 3 053 287

## Description

### Technical field

The present invention relates to a tire, more particularly to a tread reinforcing layer.

### Background art

JP 2017-177842 A discloses a motorcycle tire provided in the tread portion with a band composed of a center portion having a spiral cord structure, and shoulder portions on both sides thereof having a mesh-like cord structure, thus, the center portion can provide an increased binding force and high-speed stability performance is improved. The shoulder portions are relatively increased in the torsional rigidity and the cornering performance is improved.

EP 3 069 862 A1 discloses a manufacturing method of a pneumatic tire having a tread reinforcing layer which reduces tire mass while maintaining the durability performance of the tire. A tread reinforcing layer formation step includes a winding step for winding belt-shape plies around an approximately cylindrical winding surface. The winding step involves: a first winding step in which, with the side edges of the belt-shape plies spaced from one another, said belt-shape plies are spirally wound from a first end located on one side of the tire in the axial direction, to a second end located on the other side of the tire in the axial direction; and a second winding step in which, with the side edges of the belt-shape plies spaced from one another, said belt-shape plies are spirally wound from the second end to the first end in the direction opposite that in the first winding step. A lattice-form tread reinforcing layer is formed that has gaps substantially rhombic in shape and bounded by the belt-shape plies.

JP 2016 210305 A, JP 3 053 287 B2 and EP 3 312 022 A1 relate to similar tires EP 3 312 022 A1 is state of the art in accordance with Article 54(3) EPC.

### Summary of the invention

### Problems to be solved by the Invention

In recent years, on the other hand, along with the improvement in performance of automobiles, tires are required to be further improved in high-speed stability performance and cornering performance.

Therefore, the present invention was made in view of the above circumstances, and a primary object of the present invention is to provide a tire improved in the high-speed stability performance and cornering performance.

According to the present invention, a tire comprises:
a toroidal carcass, and
a tread reinforcing layer disposed radially outside the carcass in a tread portion, wherein
the tread reinforcing layer comprises a reinforcing cord structure in which a rubber-coated cord strip of at least one rubberized reinforcing cord covered with topping rubber is wound, and which comprises a spiral part and a mesh part,
the spiral part is formed from the rubber-coated cord strip wound spirally and circumferentially of the tire at least one turn so that the rubber-coated cord strip extends substantially in parallel with the tire circumferential direction,
the mesh part comprises
a plurality of first inclining segments in which the rubber-coated cord strip is inclined with respect to the tire circumferential direction to one direction, and a plurality of second inclining segments in which the rubber-coated cord strip is inclined with respect to the tire circumferential direction to an opposite direction to the plurality of first inclining segments, wherein
side edges of the first inclining segments are arranged so as not to contact with each other, and side edges of the second inclining segments are arranged so as not to contact with each other, whereby the first inclining segments intersect the second inclining segments forming spaces, and
in a crown region of the tread portion centered on the tire equator, the spiral part is disposed so as to overlap with the mesh part.
In the tire according to the present invention, the spiral part is disposed on the radially outside of the mesh part.

In the tire according to the present invention, it is preferable that outer ends in the tire axial direction of the mesh part are positioned axially outward of outer ends in the tire axial direction of the spiral part.

In the tire according to the present invention, it is preferable that the outer ends of the mesh part are positioned in shoulder regions located axially outside the crown region.

In the tire according to the present invention, it is preferable that the width of the spiral part measured therealong is in a range from 3% to 13% of the width between the tread edges measured along the tread surface.

In the tire according to the present invention, it is preferable that the rubber-coated cord strip forming the spiral part has the single reinforcing cord embedded therein.

In the tire according to the present invention, it is preferable that the rubber-coated cord strip forming the mesh part has a plurality of the reinforcing cords embedded therein.

In the tire according to the present invention, it is preferable that both edges in the tire axial direction of the spiral part are located at different positions than intersections between the first inclining segments and the second inclining segments.

### Effects of the invention

In the tire according to the present invention, therefore, the tread reinforcing layer can exert a large binding force to the crown region contacting with the ground mainly when running straight and initiating a turn, and also can increase the torsional rigidity of the crown region. Further, in the crown region, the rubber-coated cord strip of the spiral part is positioned on the spaces of the mesh part where its rubber-coated cord strip does not exist, therefore, the rigidity variation in the tire axial direction is reduced. As a result, transient characteristics when initiating a turn from straight running can be improved.

Therefore, the tire according to the present invention can be improved in the high-speed stability performance and cornering performance.

### Brief Description of the Drawings

Fig. 1 is a cross sectional view of a tire as an embodiment of the present invention.
Fig. 2 is a schematic perspective view of a rubber-coated cord strip.
Fig. 3 is a schematic developed plan view of the tread reinforcing layer.
Fig. 4 is an enlarged partial view showing the mesh part shown in Fig. 3.
Fig. 5 is a schematic cross sectional view of an apparatus for manufacturing the tread reinforcing layer.
Fig. 6(a) and Fig. 6(b) are diagrams for explaining a process of forming the mesh part in this embodiment.
Fig. 7(a) and Fig. 7(b) are diagrams for explaining a process of forming the mesh part of another embodiment.

### Description of the Preferred Embodiments

The present invention can be applied to various tires, for example, pneumatic tires for motorcycles, passenger cars, heavy vehicles such as truck and bus and the like, as well as non-pneumatic tires such as airless tires, but suitably applied to a pneumatic tire for motorcycles.

Therefore, taking a pneumatic tire for motorcycles as an example, embodiments of the present invention will now be described in detail with reference to the accompanying drawings.

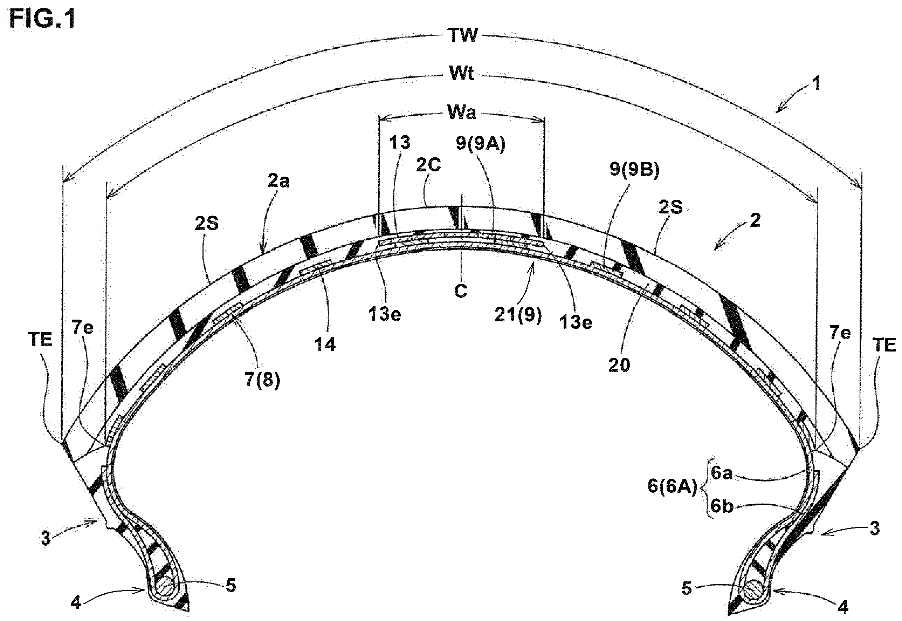

Fig. 1 shows a tire meridian cross section, including the tire rotational axis, of a motorcycle tire as an embodiment of present invention under its normal state.

The "normal state" is a state in which the tire 1 is mounted on a standard rim (not shown), inflated to a standard pressure, and loaded with no tire load.

In the present specification, unless otherwise noted, dimensions of each part of the tire 1 refer to values measured under the normal state.

The "standard rim" is a rim specified for the tire in the standard system comprising the standard on which the tire 1 is based, for example, "Standard rim" for JATMA, "Design rim " for TRA, "Measuring rim " for ETRTO.

The "standard pressure" is an air pressure specified for the tire in the standard system comprising the standard on which the tire 1 is based, for example, "Maximum air pressure" for JATMA, "Inflation pressure" for ETRTO, Maximum value specified in "TIRE LOAD LIMITS AT VARIOUS COLD INFLATION PRESSURES" table for TRA.

As shown in Fig. 1, the tire 1 in this embodiment comprises a tread portion 2 having a tread surface 2a coming into contact with the ground, a toroidal carcass 6, and a tread reinforcing layer 7 disposed radially outside the carcass 6 in the tread portion 2.

The tread portion 2 is curved in an arc shape being convex toward the radially outside, and has a pair of tread edges TE. The tread edges TE are positioned on the most outsides in the tire axial direction.

The tread portion 2 has a crown region 2c including the tire equator c and a pair of shoulder regions 2s on both sides thereof. The shoulder regions 2s are regions defined as extending from the edges in the tire axial direction of the crown region 2c to the tread edges TE.

incidentally, the crown region 2c is a region contacting with the ground mainly when running straight and initiating a turn. The shoulder regions 2s are regions contacting with the ground when the lean angle of the motorcycle is large during turning or cornering.

The carcass 6 is composed of at least one carcass ply 6A. For example, the carcass ply 6A is made of carcass cords rubberized with an unvulcanized topping rubber, and arranged at an angle of 75 to 90 degrees with respect to the tire equator C. For example, the carcass ply 6A comprises a main portion 6a extending from the tread portion 2 through the sidewall portions 3 to bead cores 5 on both sides respectively disposed in the bead portions 4, and a pair of turnup portions 6b extending continuously from the main portion 6a.

In the meridian cross section of the tire, the tread reinforcing layer 7 extends and curves along the tread portion 2 and is formed over the substantially entire width of the tread portion 2. As a result, the tread reinforcing layer 7 can increase the rigidity of the tread portion 2 over the entire width of the tread portion 2.

From this point of view, it is preferable that the width Wt of the tread reinforcing layer 7 measured therealong is set in a range from 75 % to 95 % of the width TW between the tread edges TE of the tread portion 2 measured along the tread surface 2a (hereinafter may be referred to as the developed tread width).

The tread reinforcing layer 7 in this embodiment comprises a reinforcing cord structure 8 formed by winding a rubber-coated cord strip 9 around the carcass 6.

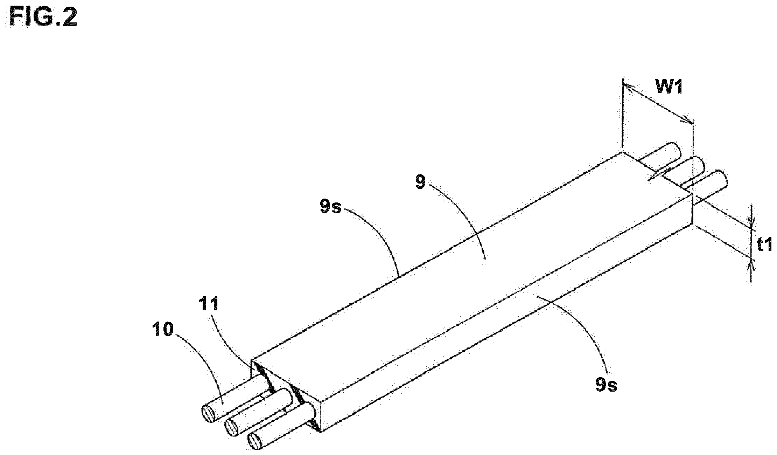

Fig. 2 is a perspective view of the rubber-coated cord strip 9. As shown in Fig. 2, the rubber-coated cord strip 9 is formed by covering one or more reinforcing cords 10 with an unvulcanized topping rubber 11.

As the reinforcing cords 10, for example, steel cords and/or organic fiber cords are preferably used.

The rubber-coated cord strip 9 has two side edges 9s extending in the longitudinal direction thereof, and for example, has a substantially rectangular cross sectional shape. The width W1 of the rubber-coated cord strip 9 is preferably set in a range from 2.5 to 12.0 mm, for example.

The thickness t1 of the rubber-coated cord strip 9 is preferably set in a range from 0.6 to 3.0 mm, for example.

In this embodiment, the reinforcing cords 10 extend in parallel with the side edge 9s.

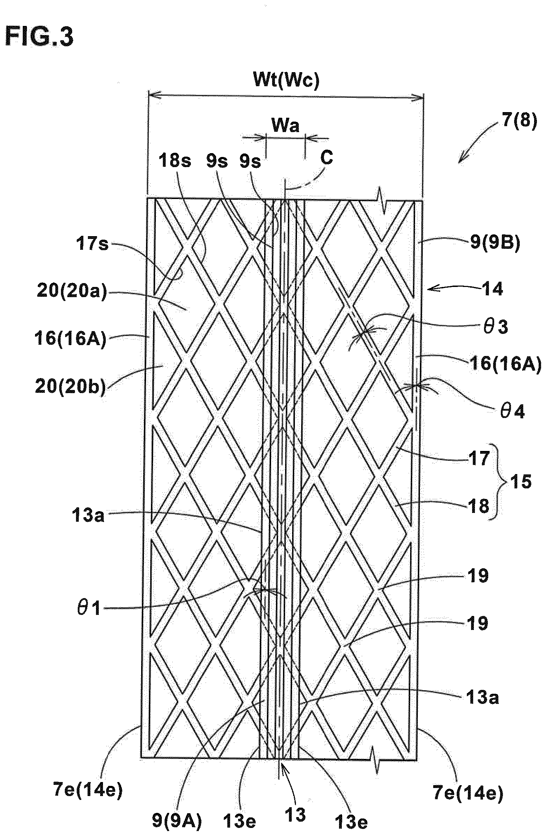

Fig. 3 is a developed plan view of the reinforcing cord structure 8 which is developed in the tire circumferential direction and axial direction.

As shown in Fig. 3, the reinforcing cord structure 8 comprises a spiral part 13 and a mesh part 14.

In the spiral part 13 in this embodiment, the rubber-coated cord strip 9 is wound spirally and circumferentially of the tire more than one turn so that the rubber-coated cord strip 9 extends substantially parallel with the tire circumferential direction. Such spiral part 13 can exert a strong binding force and prevent deformation of the tread portion 2 due to a centrifugal force during high speed running, and thereby, high-speed stability performance can be improved.

The expression "extend substantially parallel with the tire circumferential direction" means that the angle θ1 of the rubber-coated cord strip 9 with respect to the tire circumferential direction is in a range from 0 to 8 degrees, In this specification, the values of the angle θ1 refer to those obtained by averaging the angle θ1 over the circumference of the tire in order to exclude a portion inclined at a large angle.

The mesh part 14 in this embodiment comprises a plurality of inclining segments 15 in which the rubber-coated cord strip 9 extends while inclining with respect to the tire circumferential direction.

The inclining segments 15 in this embodiment include a plurality of first inclining segments 17 and a plurality of second inclining segments 18.

In the first inclining segments 17, the rubber-coated cord strip 9 is inclined to one side (diagonally right up in the figure) with respect to the tire circumferential direction. In the second inclining segments 18, the rubber-coated cord strip 9 is inclined to the other side (diagonally right down in the figure) with respect to the tire circumferential direction. Such inclining segments 15 have high torsional rigidity, and can exert a high cornering power.

In the mesh part 14 according to the present invention, side edges 17s of the first inclining segments 17 are arranged so as not to contact with each other, and side edges 18s of the second inclining segments 18 are arranged so as not to contact with each other. Thereby, in the mesh part 14, the first inclining segments 17 intersect the second inclining segments 18 while forming a plurality of spaces 20.

Thus, a tension acting on a part of the mesh part 14 can be dispersed over a wide range of the mesh part through the intersecting rubber-coated cord strip 9, so the rigidity of the tread portion 2 can be prevented from decreasing, and the cornering performance can be maintained at high levels.

According to the present invention, the spiral part 13 and the mesh part 14 are overlapped with each other in the crown region 2c. Thereby, in the crown region 2C, a large binding force can be obtained, and the torsional rigidity is increased. In the crown region 2C, as the spaces 20 in which the rubber-coated cord strip 9 of the mesh part 14 does not exist are provided with the rubber-coated cord strip 9 of the spiral part 13, therefore, the rigidity variations in the tire axial direction is reduced. As a result, transient characteristics when initiating a turn from straight running can be improved. Thus, the tire 1 in this embodiment can exert excellent high-speed stability performance and cornering performance.

It is preferable that the outer ends 14e in the tire axial direction of the mesh part 14 are positioned axially outside the respective outer ends 13e in the tire axial direction of the spiral part 13 so that the region mainly contacting with the ground during cornering is reinforced by only the mesh part 14 to increase the torsional rigidity of such region. Thus, the cornering performance can be further improved.

It is preferable that the outer ends 14e of the mesh part 14 are positioned in the respective shoulder regions 2S (shown in Fig. 1). Thereby, the above described effect to improve the cornering performance can be effectively exerted.

In this embodiment, the outer ends 14e of the mesh part 14 form the outer ends 7e of the tread reinforcing layer 7. In other words, in this embodiment, the width wc of the mesh part 14 is the same as the width Wt of the tread reinforcing layer 7. Such mesh part 14 can improve the cornering performance.

The angle θ3 of the reinforcing cord(s) 10 in the inclining segments 15 with respect to the tire circumferential direction is preferably 3 to 10 degrees, more preferably 4 to 6 degrees. By increasing the angle θ3, the cornering power of the tire 1 can be increased. Thus, it is possible to obtain preferable cornering power by changing the angle θ3 of the inclining segments 15.

The mesh part 14 in this embodiment comprises intersections 19 between the first inclining segments 17 and the second inclining segments 18. In the intersection 19 in this embodiment, the first inclining segment 17 and the second inclining segment 18 overlap one upon the other in the tire radial direction. The intersections 19 in this embodiment are formed around the spaces 20.

The spaces 20 in this embodiment include first spaces 20a and second spaces 20b.

The first spaces 20a in this embodiment are each surrounded by two of the circumferentially adjacent first inclining segments 17 and two of the circumferentially adjacent second inclining segments 18, and each have a rhombic shape.

The second spaces 20b in this embodiment are each surrounded by one of the first inclining segments 17, one of the second inclining segments 18 and one of circumferential segment 16, and each have a triangular shape.

The mesh part 14 having such spaces 20 can effectively increase the torsional rigidity, while suppressing an increase in the mass of the tire 1.

Incidentally, the above rhombic shape and triangular shape include not only those according to the strict definitions but also those slightly deformed therefrom.

Further, the spaces 20 are not limited to the rhombic shape and triangular shape. The spaces 20 may have polygonal shapes such as pentagonal shapes and parallelogram shapes.

The mesh part 14 in this embodiment comprises a plurality of the circumferential segments 16 in which the rubber-coated cord strip 9 extends in the tire circumferential direction. The circumferential segments 16 in this embodiment are located at both outer ends 14e in the tire axial direction of the mesh part 14.

Since the circumferential segments 16 are disposed in a region contacting with the ground when the motorcycle is fully leant, the binding force to such region is increased, and it is possible to reduce reaction forces and vibrations caused by, for example, gaps of a road surface. As a result, the ground contact when the motorcycle is fully leant during cornering is improved, and the cornering performance is improved.

In this embodiment, one end and the other end of each circumferential segment 16 in the tire circumferential direction are respectively connected to one of the first inclining segments 17 and one of the second inclining segments 18.

As other embodiments, it is also possible that one end and the other end of each circumferential segment 16 in the tire circumferential direction are connected to two of the first inclining segments 17 or alternatively two of the second inclining segments 18.

The circumferential segments 16 in this embodiment are arranged in line in the tire circumferential direction at each outer end 14e of the mesh part 14.

In this embodiment, the circumferential segments 16 at each outer end 14e are arranged continuously in the tire circumferential direction. Thereby, at each outer end 14e, a cord structure 16A is formed by the plurality of circumferential segments 16 as if one rubber-coated cord strip extends continuously in the tire circumferential direction. Such cord structure 16A increases the binding force to the region mainly contacting with the ground when the motorcycle is fully leant, and the cornering performance is further improved.

The angle θ4 of the reinforcing cord(s) 10 in the circumferential segments 16 with respect to the tire circumferential direction is smaller than the angle θ3 of the inclining segments 15. The angle θ4 is preferably not more than 5 degrees, more preferably not more than 3 degrees, still more preferably not more than 1 degree.

It is preferable that the rubber-coated cord strip 9B forming the mesh part 14 includes a plurality of the reinforcing cords 10 embedding therein. Such rubber-coated cord strip 9 maintains the torsional rigidity at high levels. Further, it is possible to produce the mesh part 14 having a larger axial width in good productivity.

According to the present invention, the spiral part 13 is disposed on the radially outside of the mesh part 14. Thereby, it is possible to suppress the deformation of the tread portion 2 inclusive of the mesh part 14 whose binding force is relatively small, therefore, excellent high-speed stability performance can be obtained.

It is preferable that the width (maximum) Wa of the spiral part 13 measured therealong is set in a range from 3% to 13% of the developed tread width TW.

If the width Wa of the spiral part 13 is less than 3% of the developed tread width Tw, then the spiral part 13 is not disposed over a region contacting with the ground during straight running, and there is a possibility that the deformation of the tread portion 2 is not suppressed. If the width Wa of the spiral part 13 is more than 13% of the developed tread width TW, the spiral part 13 is also formed in regions contacting with the ground only during cornering, therefore, the rigidity of such regions is excessively increased, and the ground contacting area is decreased. Thus, there is a possibility that sufficient cornering power can not be obtained. From such viewpoints, it is more preferable that the width wa of the spiral part 13 is set in a range from 5% to 10% of the developed tread width TW.

It is preferable that the rubber-coated cord strip 9A forming the spiral part 13 includes the single reinforcing cord 10 embedded therein. Thereby, by adjusting the arrangement density of the rubber-coated cord strip 9, namely, adjusting the winding pitches, the binding force to the crown region 2C whose axial width is small and the torsional rigidity thereof can be set closer to their desirable values.

In the case of such rubber-coated cord strip 9A with the single reinforcing cord 10, it is preferable that the width W1 is 2.5 to 3.5 mm for example, and the thickness t1 is 0.6 to 3.0 mm for example.

It is preferable that both edges 13a in the tire axial direction of the spiral part 13 are located at different positions than the intersections 19.

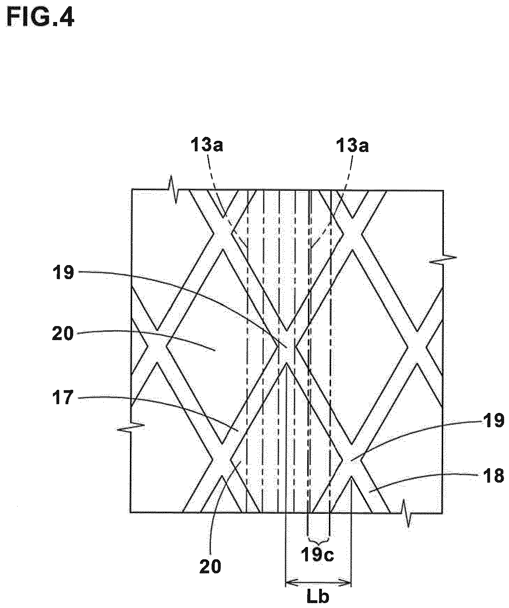

If the edges 13a of the spiral part 13 are disposed at the intersections 19, the radial height of the edges 13a of the spiral part 13 at the intersections 19 becomes largely different from the radial height not at the intersections 19, therefore, there is a possibility that the uniformity is deteriorated. From such viewpoints, it is preferable that the edges 13a of the spiral part 13 are disposed in middle portions 19c between the axially adjacent intersections 19 as shown in Fig. 4 by imaginary lines.

Here, the middle portion 19c means a middle part when the distance Lb in the tire axial direction between the axially adjacent intersections 19 is equally divided into three parts. The edges 13a include the outer ends 13e of the spiral part 13.

In order to effectively derive the above described effect, it is preferred that the rubber-coated cord strip 9B forming the spiral part 13 is located at different positions than the intersections 19. In other words, it is preferable that the rubber-coated cord strip 9B forming the spiral part 13 is arranged not to overlap with the intersections 19.

In the spiral part 13 in this embodiment, axially adjacent side edges 9s of the rubber-coated cord strip 9 are substantially in contact with each other. Thereby, it is possible to exert a large binding force.

However, in the spiral part 13, it is also possible that the axially adjacent side edges 9s of the rubber-coated cord strip 9 are overlapped with each other, or that the axially adjacent side edges 9s are separated from each other in the tire axial direction (not shown).

The spiral part 13 in this embodiment is centered on the tire equator C.

Next, a method for manufacturing such tread reinforcing layer 7 of the tire 1 will be described.

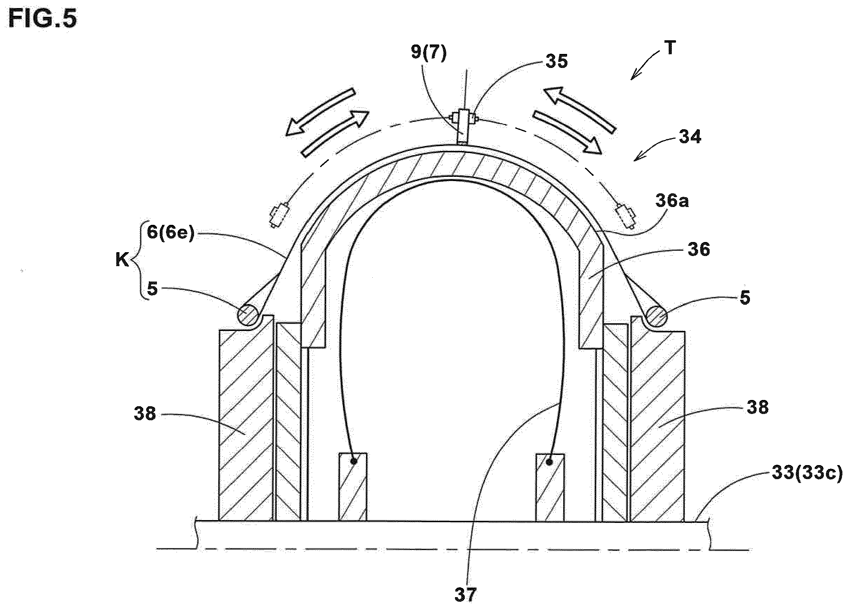

Fig. 5 shows an apparatus T for manufacturing the tread reinforcing layer 7.

The manufacturing apparatus T employed in this embodiment has a well-known structure comprising a base 33, a substantially cylindrical drum 34 rotatably supported by the base 33, and an applicator 35 for supplying the rubber-coated cord strip 9 to the drum 34.

The base 33 comprises a rotating shaft 33c rotatably holding the drum 34. Further, the base 33 comprises a power transmission device for rotating the rotating shaft 33c, a control unit (not shown) for controlling the rotation and the like.

The drum 34 comprises: an annular core 36 provided with an outer peripheral surface 36a having a profile approximate to that of the tread surface 2a of the tire 1; a device 37 for radially expanding/contracting the annular core 36, for example, made from a rubber member; and a tire holding device 38 for holding a raw tire main body K including bead cores 5. In this embodiment, a rubber-coated cord strip 9 is wound on the raw tire main body K.

The applicator 35 is, for example, a conveyor which supplies the rubber-coated cord strip 9, which is placed on the conveying surface, to the drum 34.

For example, on the upstream side of the applicator 35, there is disposed a rubber extruder (not shown) for continuously extruding the rubber of the rubber-coated cord strip 9. The applicator 35 is supported by, for example, a three-dimensional moving device (not shown) so that the applicator can be moved in the axial direction and radial direction of the drum 34.

A method for manufacturing the tire 1 in this embodiment comprises a step of preparing a raw tire main body K, and a step of making the tread reinforcing layer 7 by winding the rubber-coated cord strip 9 around the outer peripheral surface of the raw tire main body K. The raw tire main body K includes the carcass 6.

As to the step of preparing a raw tire main body K, its detailed explanation is omitted since a well-known manufacturing method can be employed.

In the winding step of this embodiment, for each of the spiral part 13 and the mesh part 14, one separate rubber-coated cord strip 9 is wound.

The winding step in this embodiment includes: a first step of forming the mesh part 14 and a second step of forming the spiral part 13, which are performed in this order.

As to the second step, its detailed explanation is omitted since a well-known method can be employed.

In the winding step in this embodiment, the rubber-coated cord strips 9 are wound on a surface 6e which is the radially outer surface of the carcass 6 of the raw tire main body K.

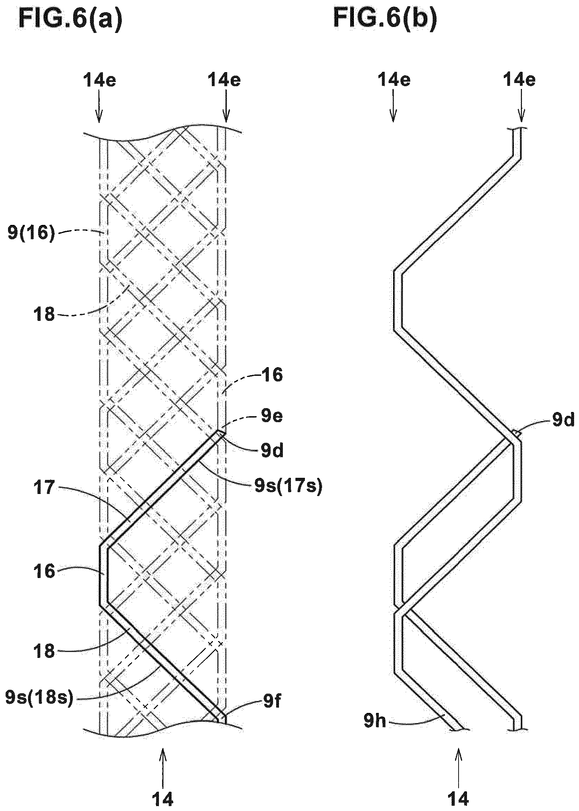

Figs. 6(a) and 6(b) conceptually illustrate the first step of this embodiment.

Fig. 6(a) is a plan view showing a state of the mesh part 14 immediately after the winding of the rubber-coated cord strip 9 is started, wherein turns of the rubber-coated cord strip 9 not yet wound are indicated by imaginary lines, and a turn of the rubber-coated cord strip 9 partially wound is indicated by solid lines and reference numeral 9f.

Fig. 6 (b) is a plan view showing a state of the mesh part 14 when the winding of the rubber-coated cord strip 9 has been progressed more than Fig. 6(a), wherein a turn of the rubber-coated cord strip 9 completely wound is indicated by solid lines and reference numeral 9h, and a turn partially wound is indicated by solid lines and reference numeral 9d.

In the first step, as shown in Fig. 6(a), first, a winding start end 9d of the rubber-coated cord strip 9 when starting the winding is fixed, for example, to one outer end 14e of the mesh part 14.

Incidentally, the winding start end 9d may be fixed to the other outer end 14e of the mesh part 14 or a position on one of the inclining portions 15.

In the rubber-coated cord strip 9 wound in the first step, a plurality of the reinforcing cords 10, for example, three reinforcing cords 10 are embedded in the topping rubber.

Then, in the first step, the applicator 35 applies the rubber-coated cord strip 9 to the outer peripheral surface 36e of the rotating annular core 36 while reciprocating between the outer ends 14e. In this step, as shown in Fig. 6, the rubber-coated cord strip 9 is wound in a zigzag shape comprising the first inclining segments 17 and the second inclining segments 18 so that the side edges 9s (shown in Fig. 2) of the rubber-coated cord strip 9 are not in contact with each other.

In the first step in this embodiment, a first inclining segment 17, a circumferential segment 16 on one side, a second inclining segment 18, and an circumferential segment 16 on the other side --- are wound in this order, and these are repeated to make one turn until a plurality of turns are formed.

In this embodiment, therefore, one end and the other end of each circumferential segment 16 are respectively connected to one of the first inclining segments 17 and one of the second inclining segments 18.

Through this step, the rubber-coated cord strip 9 can be formed into the mesh part 14 having spaces 20 surrounded by the first inclining segments 17 and the second inclining segments 18.

In the first step, it is preferable that the winding stop end 9e of the rubber-coated cord strip 9 when ending the winding is fixed so as to continue to the winding start end 9d in the tire circumferential direction.

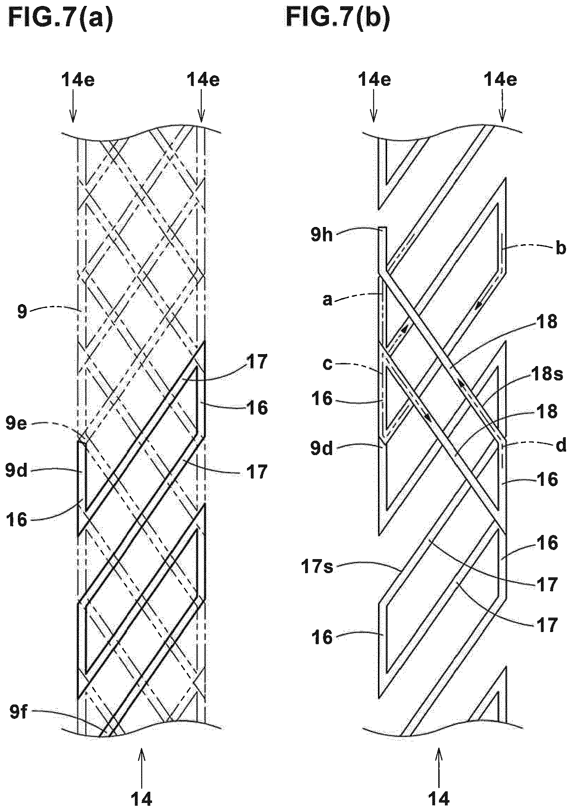

Figs. 7(a) and 7(b) conceptually illustrate the first step of another embodiment.

Fig. 7(a) is a plan view showing a state of the mesh part 14 immediately after the winding of the rubber-coated cord strip 9 is started, wherein turns of the rubber-coated cord strip 9 not yet wound are indicated by imaginary lines, and a turn of the rubber-coated cord strip 9 partially wound is indicated by solid lines and reference numeral 9f.

Fig. 7(b) is a plan view showing a state of the mesh part 14 when the winding of the rubber-coated cord strip 9 has been progressed more than Fig. 7(a), wherein a turn of the rubber-coated cord strip 9 partially wound is indicated by reference numeral 9h, and the rubber-coated cord strip 9 is wound in the order indicated by allowed imaginary lines a, b, c and d.

The same reference numerals are given to the same parts as those in the embodiment of Fig. 6, and the description thereof is omitted.

In the first step of this embodiment, the winding start end 9d at the beginning of winding of the rubber-coated cord strip 9 is fixed to one outer end 14e of the mesh part 14. Incidentally, the winding start end 9d may be fixed to the other outer end 14e of the mesh part 14 or a position on one of the inclining portions 15.

Next, the applicator 35 supplies the rubber-coated cord strip 9 to the outer peripheral surface 36a of the rotating annular core 36 while reciprocating between the outer ends 14e. In this step, as shown in Fig. 7(a), firstly, the rubber-coated cord strip 9 is wound in the order of a first inclining segment 17, a circumferential segment 16 on one side, a first inclining segment 17, a circumferential segment 16 on the other side, a first inclining segment 17 ---.

Next, as shown in Fig. 7(b), the rubber-coated cord strip 9 is wound in the order of a second inclining segment 18, a circumferential segment 16 on one side, a second inclining segment 18, a circumferential segment 16 on the other side, a second inclining segment 18 ---.

That is, in this embodiment, the mesh part 14 is formed such that both ends of each of the circumferential segments 16 are connected to two of the first inclining segments 17 adjacent to each other in the tire circumferential direction, or alternatively two of the second inclining segments 18 adjacent to each other in the tire circumferential direction. And the side edges 17s of the first inclining segments 17 are arranged so as not to contact with each other, and the side edges 18s of the second inclining segments 18 are arranged so as not to contact with each other.

As a result, the mesh part 14 is formed to have a plurality of spaces 20 surrounded by the first inclining segments 17 and the second inclining segments 18.

while detailed description has been made of especially preferable embodiments of the present invention, the present invention can be embodied in various forms within the scope of the appended claims.

### working Examples

Motorcycle tires having the basic structure shown in Fig. 1 and tread reinforcing layers formed based on that shown in Fig. 3 were experimentally manufactured. The specifications are shown in Table 1.

Common specifications are as follows.

Rubber-coated cord strip (mesh part): 4.0 mm in width, 1.0 mm in
thickness, three reinforcing cords embedded Rubber-coated cord strip (spiral part): 2.5 mm in width, 1.0 mm
in thickness, one reinforcing cord embedded width wt of the tread reinforcing layer: 90 % of TW width wc of the mesh part = width wt of the tread reinforcing layer

These tires were tested for high-speed stability performance, and cornering performance. Test methods are as follows.

### < High-speed stability performance & Cornering performance >

The test tires were mounted on all wheels of a 1300cc motorcycle under the following conditions.
Front wheel: tire size 120/70ZR17, rim size 17M/CxMT3.50, tire pressure 250 kPa
Rear wheel: tire size 190/55ZR17, rim size 17M/CxMT5.50, tire pressure 250 kPa

The motorcycle was run on a dry asphalt road in a test course, and the test tires were evaluated by the test rider about high-speed stability performance based on handling stability, grip and the like, and also cornering performance based on transient characteristics and handling characteristics. The results are indicated in Table 1 by an index based on Comparative Example tire Ref.1 being 100, wherein the larger value is better.

**Table 1**

| Tire | Ref.1 | Ex.1 | Ex.2 | Ex.3 | Ex.4 | Ex.5 | Ex.6 | Ex.7 |
|---|---|---|---|---|---|---|---|---|
| reinforcing cord structure *1 | A | B | B | B | B | B | B | B |
| | -- | C | D | C | C | C | C | C |
| Wa/TW (%) | 8 | 8 | 8 | 2 | 3 | 13 | 15 | 8 |
| number of reinforcing cord(s) in rubber-coated cord strip of spiral part | 1 | 1 | 1 | 1 | 1 | 1 | 1 | 2 |
| high-speed stability performance | 100 | 120 | 105 | 105 | 115 | 120 | 115 | 110 |
| cornering performance | 100 | 120 | 120 | 115 | 120 | 115 | 105 | 110 |

| | | | | | | | | |
|---|---|---|---|---|---|---|---|---|
| *1) A: only the spiral part B: the spiral part and the mesh part C: the spiral part was disposed radially outside the mesh part D: the spiral part was disposed radially inside the mesh part | | | | | | | | |

As a result of the tests, it was confirmed that the tire of each example is superior in balance to the tire of the comparative example.

### Description of the reference numerals

- 1: tire
- 2c: crown region
- 7: tread reinforcing layer
- 8: reinforcing cord structure
- 9: rubber-coated cord strip
- 13: spiral part
- 14: mesh part
- C: tire equator

A tire 1 comprises a tread reinforcing layer 7 comprising a reinforcing cord structure 8 in which a rubber-coated cord strip 9 of at least one rubberized reinforcing cord 10 covered with topping rubber 11 is wound. The reinforcing cord structure 8 comprises a spiral part 13 and a mesh part 14. In a crown region 2C of the tread portion 2 centered on the tire equator C, the spiral part 13 overlaps with the mesh part 14.

## Claims

1. A tire, comprising:
a toroidal carcass (6), and
a tread reinforcing layer (7) disposed radially outside the carcass (6) in a tread portion (2),
wherein
the tread reinforcing layer (7) comprises a reinforcing cord structure (8) in which a rubber-coated cord strip (9) of at least one rubberized reinforcing cord (10) covered with topping rubber (11) is wound, and which comprises a spiral part (13) and a mesh part (14), the spiral part (13) is formed from the rubber-coated cord strip (9) wound spirally and circumferentially of the tire at least one turn so that the rubber-coated cord strip (9) extends substantially in parallel with the tire circumferential direction,
the mesh part (14) comprises
a plurality of first inclining segments (17) in which the rubber-coated cord strip (9) is inclined with respect to the tire circumferential direction to one direction, and
a plurality of second inclining segments (18) in which the rubber-coated cord strip (9) is inclined with respect to the tire circumferential direction to an opposite direction to the plurality of first inclining segments (17), wherein side edges (17s) of the first inclining segments (17) are arranged so as not to contact with each other, and side edges (18s) of the second inclining segments (1-8) are arranged so as not to contact with each other, whereby the first inclining segments (17) intersect the second inclining segments (18) forming spaces (20),
in a crown region (2C) of the tread portion (2) centered on the tire equator (C), the spiral part (13) is disposed so as to overlap with the mesh part (14),
**characterized in that**
the spiral part (13) is disposed radially outside of the mesh part (14).

2. The tire according to claim 1, wherein
outer ends (14e) in the tire axial direction of the mesh part (14) are positioned axially outward of outer ends (13e) in the tire axial direction of the spiral part (13).

3. The tire according to claim 2, wherein
the outer ends (14e) of the mesh part (14) are positioned in respective shoulder regions (2S) located axially outside the crown region (2C).

4. The tire according to claim 1, 2 or 3, wherein
a width (wa) of the spiral part (13) measured therealong is in a range from 3% to t3% of a width (TW) between the tread edges (TE) measured along the tread surface (2S).

5. The tire according to claim 4, wherein
the rubber-coated cord strip (9) forming the spiral part (13) has one single reinforcing cord (10) embedded therein.

6. The tire according to claim 5, wherein
the rubber-coated cord strip (9) forming the mesh part (14) has a plurality of the reinforcing cords (10) embedded therein.

7. The tire according to any one of claims 1-6, wherein
both edges (13a) in the tire axial direction of the spiral part (13) are located at different positions than intersections (19) between the first inclining segments (17) and the second inclining segments (18) .

## Patentansprüche

1. Reifen, der aufweist:
eine toroidale Karkasse (6); und
eine Laufflächenverstärkungsschicht (7), die radial außerhalb von der Karkasse (6) in einem Laufflächenabschnitt (2) vorgesehen ist, wobei
die Laufflächenverstärkungsschicht (7) einen Verstärkungskordaufbau (8) aufweist, bei dem ein gummibeschichtetes Kordband (9) aus mindestens einem mit Belaggummi (11) bedeckten gummierten Verstärkungskord (10) gewickelt ist und der einen Spiralteil (13) und einen Netzteil (14) aufweist, wobei der Spiralteil (13) aus dem gummibeschichteten Kordband (9) gebildet ist, das mindestens in einer Umdrehung spiralförmig und den Reifen umlaufend gewickelt ist, sodass sich das gummibeschichtete Kordband (9) im Wesentlichen parallel zu der Reifenumfangsrichtung erstreckt,
der Netzteil (14) aufweist:
eine Vielzahl erster geneigter Segmente (17), bei denen das gummibeschichtete Kordband (9) bezüglich der Reifenumfangsrichtung zu einer Richtung hingeneigt ist; und
eine Vielzahl zweiter geneigter Segmente (18), bei denen das gummibeschichtete Kordband (9) bezüglich der Reifenumfangsrichtung zu einer zu der Vielzahl der ersten geneigten Segmente (17) entgegengesetzten Richtung hingeneigt ist, wobei Seitenränder (17s) der ersten geneigten Segmente (17) so angeordnet sind, dass sie einander nicht berühren, und Seitenränder (18s) der zweiten geneigten Segmente (18) so angeordnet sind, dass sie einander nicht berühren, wodurch die ersten geneigten Segmente (17) die zweiten geneigten Segmente (18) Räume (20) bildend kreuzen,
der Spiralteil (13) in einem an dem Reifenäquator (C) zentrierten Kronenbereich (2C) des Laufflächenabschnitts (2) so vorgesehen ist, dass er mit dem Netzteil (14) überlappt,
**dadurch gekennzeichnet, dass**
der Spiralteil (13) radial außerhalb von dem Netzteil (14) vorgesehen ist.

2. Reifen gemäß Anspruch 1, wobei
in der Reifenaxialrichtung äußere Enden (14e) des Netzteils (14) axial auswärtig von in der Reifenaxialrichtung äußeren Enden (13e) des Spiralteils (13) platziert sind.

3. Reifen gemäß Anspruch 2, wobei
die äußeren Enden (14e) des Netzteils (14) in jeweiligen Schulterbereichen (2S) platziert sind, die axial außerhalb von dem Kronenbereich (2C) liegen.

4. Reifen gemäß Anspruch 1, 2 oder 3, wobei
eine Breite (wa) des Spiralteils (13), die entlang desselben gemessen ist, in einer Spanne von 3% bis t3% einer entlang der Laufflächenoberfläche (2S) gemessenen Breite (TW) zwischen den Laufflächenrändern (TE) ist.

5. Reifen gemäß Anspruch 4, wobei
das gummibeschichtete Kordband (9), das den Spiralteil (13) bildet, einen einzelnen Verstärkungskord (10) hat, der darin eingebettet ist.

6. Reifen gemäß Anspruch 5, wobei
das gummibeschichtete Kordband (9), das den Netzteil (14) bildet, eine Vielzahl der Verstärkungskorde (10) hat, die darin eingebettet sind.

7. Reifen gemäß einem der Ansprüche 1 - 6, wobei
beide Ränder (13a) in der Reifenaxialrichtung des Spiralteils (13) an anderen Stellen liegen als Kreuzungen (19) zwischen den ersten geneigten Segmenten (17) und den zweiten geneigten Segmenten (18).

## Revendications

1. Pneumatique comprenant :
une carcasse toroïdale (6), et
une couche de renforcement de bande de roulement (7) disposée radialement à l'extérieur de la carcasse (6) dans la partie de bande de roulement (2),
dans lequel :
la couche de renforcement de bande de roulement (7) comprend une structure de corde de renforcement (8) dans laquelle une bande de corde recouverte de caoutchouc (9) d'au moins une corde de renforcement caoutchoutée (10) recouverte avec un caoutchouc de gommage (11) est enroulée, et qui comprend une partie en spirale (13) et une partie d'engrènement (14), la partie en spirale (13) est formée à partir d'une bande de corde recouverte de caoutchouc (9) enroulée en spirale et de manière circonférentielle du pneumatique, au moins sur un tour de sorte que la bande de corde recouverte de caoutchouc (9) s'étend sensiblement parallèlement à la direction circonférentielle du pneumatique,
la partie d'engrènement (14) comprend :
une pluralité de premiers segments d'inclinaison (17) dans lesquels la bande de corde recouverte de caoutchouc (9) est inclinée par rapport à la direction circonférentielle du pneumatique vers une direction, et
une pluralité de seconds segments d'inclinaison (18) dans lesquels la bande de corde recouverte de caoutchouc (9) est inclinée par rapport à la direction circonférentielle du pneumatique dans une direction opposée à la pluralité de premiers segments d'inclinaison (17), dans lequel des bords latéraux (17s) des premiers segments d'inclinaison (17) sont agencés afin de ne pas être en contact entre eux, et les bords latéraux (18s) des seconds segments d'inclinaison (1-8) sont agencés afin de ne pas être en contact entre eux, moyennant quoi les premiers segments d'inclinaison (17) coupent les seconds segments d'inclinaison (18) formant des espaces (20),
dans une région de sommet (2C) de la partie de bande de roulement (2) centrée sur l'équateur (C) du pneumatique, la partie en spirale (13) est disposée afin de chevaucher avec la partie d'engrènement (14),
**caractérisé en ce que** :
la partie en spirale (13) est disposée radialement vers l'extérieur de la partie d'engrènement (14).

2. Pneumatique selon la revendication 1, dans lequel :
les extrémités externes (14e) dans la direction axiale du pneumatique de la partie d'engrènement (14) sont positionnées axialement vers l'extérieur des extrémités externes (13e) dans la direction axiale du pneumatique de la partie en spirale (13).

3. Pneumatique selon la revendication 2, dans lequel :
les extrémités externes (14e) de la partie d'engrènement (14) sont positionnées dans des régions d'épaulement (2S) respectives, positionnées axialement à l'extérieur de la région de sommet (2C).

4. Pneumatique selon la revendication 1, 2 ou 3, dans lequel :
une largeur (wa) de la partie en spirale (13) mesurée le long de cette dernière est dans une plage de 3 % à t3% d'une largeur (TW) entre les bords de bande de roulement (TE) mesurés le long de la surface de bande de roulement (2S).

5. Pneumatique selon la revendication 4, dans lequel :
la bande de corde recouverte de caoutchouc (9) formant la partie en spirale (13) a une seule corde de renforcement (10) encastrée dans cette dernière.

6. Pneumatique selon la revendication 5, dans lequel :
la bande de corde recouverte de caoutchouc (9) formant la partie d'engrènement (14) a une pluralité de cordes de renforcement (10) encastrées à l'intérieur de cette dernière.

7. Pneumatique selon l'une quelconque des revendications 1 à 6, dans lequel :
les deux bords (13a) dans la direction axiale de pneumatique de la partie en spirale (13) sont positionnés à différentes positions par rapport aux intersections (19) entre les premiers segments d'inclinaison (17) et les seconds segments d'inclinaison (18).
